# FASCICULE DE BREVET EUROPEEN

(11) **EP 2 103 099 B1**
(45) Date de publication et mention de la délivrance du brevet: **04.04.2018**
(21) Numéro de dépôt: 07871878.0
(22) Date de dépôt: 05.12.2007
(51) Int. Cl.: H04L 12/66, H04L 12/18, H04M 7/00, H04M 3/56

(54) **PONT DE CONFERENCE MIXTE**
GATEWAY FÜR GEMISCHTE KONFERENZEN
MIXED CONFERENCE GATEWAY

(30) Priorité: 22.12.2006 FR 0655908
(43) Date de publication de la demande: 23.09.2009
(73) Titulaire: Orange, 75015 Paris (FR)
(72) Inventeur: NAGLE, Arnault, F-22300 Lannion (FR); SOLLAUD, Aurélien, F-22560 Trebeurden (FR)
(86) Numéro de dépôt international: PCT/FR2007/052443
(87) Numéro de publication internationale: WO 2008/081130

(56) Documents cités:
- FR-A1- 2 831 377
- ROSENBERG J: "Models for multi party conferencing in SIP" INTERNET ENGINEERING TASK FORCE INTERNET DRAFT, 17 novembre 2000 (2000-11-17), pages 1-21, XP002205321

## Description

La présente invention concerne un pont de conférence destiné à mettre en communication une pluralité de terminaux participant à une conférence audio.

L'invention trouve application dans le contexte général du développement de services audio utilisant le protocole IP (« Internet Protocol »), appelé génériquement Voix sur IP ou VoIP (« Voice over IP »).

L'invention peut être mise en oeuvre sur des réseaux de transport de données par commutation de paquets, comme le réseau Internet, utilisant des protocoles de signalisation spécifiques VoIP pour contrôler la gestion des appels, tels que les protocoles SIP (« Session Initiation Protocol ») et H.323, ainsi que des protocoles de transport de données en temps réel pour transporter les données audio, le protocole RTP (« Real-time Transport Protocol ») par exemple.

Une application particulièrement avantageuse de l'invention concerne les conférences audio en VoIP.

Le document FR 2 831 377 divulgue des systèmes de conférences et plus particulièrement un pont de conférence mixte.

Dans le cadre des conférences audio, plusieurs configurations d'échanges de flux audio peuvent être envisagées, notamment :
- les liaisons multipoint en mode distribué dans lesquelles chaque terminal est chargé de recevoir, de traiter les flux audio qu'il reçoit des terminaux des autres participants et d'émettre son flux audio vers ces derniers.
- les liaisons multipoint en mode centralisé dans lesquelles une entité émettrice, généralement appelée « pont de conférence », gère dans le réseau les flux audio à destination des terminaux récepteurs des participants. L'utilisation d'un pont lors d'une conférence audio présente de nombreux avantages :
- réduction du trafic de messages de signalisation, par exemple SIP en VoIP,
- gestion facilitée de la conférence du fait de la possibilité de procéder à des invitations ou des suppressions de participants, de diffuser des informations, en particulier sur les participants présents à la conférence, et de contrôler et administrer facilement la conférence, - pour les opérateurs, facturation simplifiée des services puisqu'il est possible de savoir à tout moment qui est présent ou absent à la conférence.

L'invention s'adresse aux liaisons multipoint centralisées par pont.

Le principe des ponts est de permettre que la conférence ait lieu en utilisant un point central soit pour combiner les flux audio selon le principe du mixage, soit pour dupliquer et transmettre les flux audio selon le principe de la réplication. On distingue donc deux types de pont : les ponts fonctionnant en mode mixeur, ou ponts mixeurs, et les ponts fonctionnant en mode répliquant, ou ponts répliquants.

Selon le principe de fonctionnement du pont mixeur, chaque terminal émetteur envoie un flux audio au pont, qu'il soit de type mono, stéréo, multicanal, ... Pour chaque terminal récepteur, le pont mixe tous les flux reçus des autres participants en omettant la contribution du terminal récepteur concerné s'il a émis un flux. Ainsi, sur N terminaux en conférence, chacun envoie son flux au pont et reçoit de celui-ci un flux mixé des N-1 autres.

Le principe de fonctionnement du pont répliquant consiste, pour chaque terminal émetteur, à envoyer un flux audio au pont, qu'il soit de type mono, stéréo, multicanal, ... Au niveau du pont, le flux de chaque terminal émetteur est transmis à tous les autres participants. Ainsi, chaque terminal reçoit du pont N-1 flux correspondant aux N-1 autres terminaux.

On peut alors constater que ces deux types de pont présentent des contraintes très différentes, en fonction du nombre N (on considère N>1) de terminaux participants, en termes de débit et de coûts d'unité de calcul de CPU pour les ponts et les terminaux :
- Les débits sortants des ponts sont respectivement proportionnels à N pour le pont mixeur et à N(N-1) pour le pont répliquant. Les débits entrants au niveau des ponts sont proportionnels à N dans les deux cas.
- Les débits entrants des terminaux sont respectivement proportionnels à 1 pour la configuration à pont mixeur et à N-1 pour la configuration à pont répliquant. Les débits sortants au niveau des terminaux sont proportionnels à 1 dans les deux cas.
- Les coûts CPU pour le pont mixeur sont proportionnels à 2N, à savoir N encodages et N décodages. Par contre, ils sont nuls pour le pont répliquant.
- Les coûts CPU pour les terminaux sont respectivement proportionnels à 2 pour la configuration à pont mixeur, soit 1 encodage et 1 décodage, et à 1+N pour la configuration à pont répliquant, soit 1 encodage et N-1 décodages.

On constate sur ces chiffres que les contraintes sur le pont et sur les terminaux sont plus grandes sur la configuration à pont répliquant lorsque le nombre de terminaux participants augmente, sauf en ce qui concerne les coûts CPU du pont mixeur. Le pont mixeur est pénalisé sur les coûts CPU, cependant il faut noter à cet égard que la puissance de ce type de pont croît actuellement de manière régulière.

Un autre avantage du pont mixeur sur le pont répliquant est que, si le pont mixeur dispose d'un grand nombre de codeurs-décodeurs (codecs), la conférence audio est transparente en termes de codec pour les terminaux puisque chaque terminal ne reçoit du pont qu'un flux codé adapté à son propre codec, alors que, dans le cas d'un pont répliquant, les terminaux doivent avoir des codecs communs, ceci étant d'autant plus difficile à réaliser que le nombre N de terminaux est grand.

Par contre, le pont répliquant présente l'avantage d'éviter un décodage suivi d'un encodage au niveau du pont, ce qui garantit l'absence de perte de qualité audio et de retard supplémentaire, contrairement au pont mixeur.

Concernant une spatialisation éventuelle du son, le pont répliquant à l'avantage de permettre aux terminaux d'effectuer une spatialisation personnalisée puisqu'ils disposent des flux descendants individuels des autres terminaux, tandis que le pont mixeur permet d'effectuer la spatialisation au niveau du pont, et non au niveau des terminaux, avec l'avantage de pouvoir générer une scène sonore commune à tous les participants.

Il ressort des comparaisons qui précèdent que, compte tenu des avantages et inconvénients respectifs des deux types de pont, il est très difficile de réaliser une conférence audio qui soit totalement satisfaisante à la fois sur le plan de la qualité audio et sur le plan des contraintes techniques liées notamment aux capacités des terminaux à traiter un grand nombre de flux.

Aussi, un but de l'invention est de proposer un pont de conférence destiné à mettre en communication une pluralité de terminaux participant à une conférence audio, qui permettrait d'obtenir une gestion optimisée dudit pont et des terminaux dans toutes les situations pouvant se rencontrer lors de ladite conférence audio.

Ce but est atteint, conformément à l'invention, du fait que ledit pont de conférence comprend un module de fonctionnement en mode répliquant, un module de fonctionnement en mode mixeur, et un module de gestion apte à activer au moins un desdits modules de fonctionnement selon le nombre de terminaux disposant de capacités suffisantes pour supporter le mode répliquant.

Ainsi, le pont de conférence conforme à l'invention est un pont mixte pouvant fonctionner en mode répliquant et/ou en mode mixeur. Les critères pour déterminer si l'un et/ou l'autre des deux modes de fonctionnement doivent être activés dépendent en substance de deux paramètres qui sont le nombre de terminaux et l'aptitude des terminaux à supporter le mode répliquant. On a vu précédemment en effet que le mode répliquant a l'avantage d'offrir une meilleure qualité audio que le mode mixeur, mais qu'il est limité à un nombre relativement faible de terminaux, ceux-ci n'ayant pas en général les capacités de calcul et de réseau suffisantes pour traiter un grand nombre de flux descendants. Dans ce cas, l'avantage revient au mode mixeur qui ne demande aux terminaux de ne recevoir et décoder qu'un seul flux descendant.

En d'autres termes, il est préférable de donner la priorité au mode répliquant pour un nombre faible de terminaux participants, ce qui est le cas par exemple en début de conférence, au moment où les participants ne sont pas encore tous présents.

Selon un premier mode de réalisation, le module de fonctionnement en mode répliquant est activé pour un nombre de terminaux au plus égal à un nombre limite pour lequel les terminaux disposent de capacités suffisantes pour supporter le mode répliquant, et le module de fonctionnement en mode mixeur est activé pour un nombre de terminaux supérieur audit nombre limite.

Dans ce mode de réalisation, qui sera appelé par la suite « gestion fixe », le pont bascule d'un fonctionnement en mode répliquant à un fonctionnement en mode mixeur dès que le nombre N de terminaux participant à la conférence dépasse un nombre limite L.

Ce mode de réalisation s'applique bien à des réseaux locaux tels qu'un réseau LAN (« Local Area Network ») pour lesquels les terminaux, leur activité et leurs capacités sont connus à l'avance. Bien entendu, cette connaissance a priori du matériel disponible est une contrainte forte, ce qui en cas de difficulté peut aboutir à l'exclusion de la conférence de certains terminaux.

Selon un deuxième mode de réalisation, seul le module de fonctionnement en mode répliquant est activé tant que le nombre de terminaux est compatible avec les capacités desdits terminaux à supporter le mode répliquant.

Ce mode de réalisation sera appelé « gestion dynamique » puisque, contrairement au mode de gestion fixe, il est tenu compte du fait que le nombre de participants varie au cours de la conférence audio et que les capacités des terminaux doivent être réévaluées en conséquence.

En mode de gestion dynamique, le mode de fonctionnement par défaut du pont mixte, objet de l'invention, est le mode répliquant, car c'est celui qui donne le meilleur résultat pour un petit nombre de terminaux participants.

En gestion dynamique, l'entrée ou le départ d'un nouveau participant entraîne des négociations entre les terminaux et le pont, afin de déterminer comment le pont va se comporter envers certains terminaux ou tous les terminaux. Dans ce cas, aucune hypothèse a priori n'est faite sur les terminaux et leurs capacités, ce qui représente un avantage sur la gestion fixe.

Dans un premier temps, le pont cherchera donc à négocier les flux, par l'intermédiaire d'un protocole de signalisation comme SIP, de manière à maintenir le plus longtemps possible la conférence entre les participants dans le mode répliquant.

Autrement dit, le pont cherchera à gérer à la fois la signalisation et le relais des flux média. En SIP par exemple, la négociation des flux se fera comme pour un appel SIP point à point standard entre chaque participant et le pont de conférence. Par contre, la négociation se différencie dans le sens où pour un terminal et un flux audio particuliers, il faudra spécifier un flux en émission et N-1 en réception pour le pont en mode répliquant au lieu d'un flux bidirectionnel dans le cas d'un pont mixeur. Pour le pont de conférence lui-même, la négociation sera inverse, à savoir un flux en réception et N-1 en émission pour chaque participant.

Si ces négociations réussissent pour chaque terminal participant, c'est-à-dire que les canaux audio sont bien créés avec les codecs adéquats, alors cela veut dire que tous les terminaux ont les capacités de supporter cette bande passante descendante et que la charge CPU limite pour les traitements de décodage/mixage n'est pas atteinte. Tous les terminaux pourront ainsi participer de manière optimale à la conférence selon le mode répliquant.

Si au moins un des terminaux participants ne peut supporter cette charge, l'invention prévoit alors deux variantes.

Selon une première variante dite de « gestion dynamique individualisée », ledit module de fonctionnement en mode répliquant est activé pour les terminaux disposant de capacités suffisantes pour supporter le mode répliquant, et ledit module de fonctionnement en mode mixeur est activé pour les terminaux ne disposant pas de capacités suffisantes pour supporter le mode répliquant.

Pour les terminaux ne pouvant plus supporter le mode répliquant les flux audio seront mixés pour n'en former plus qu'un, après renégociation d'un flux média. On aura donc, d'un côté, des terminaux qui recevront un flux audio mixé car ils n'ont plus les capacités suffisantes pour supporter le mode répliquant, et, de l'autre, des terminaux qui recevront plusieurs flux audio selon le mode répliquant qu'ils pourront traiter à leur guise. Une bascule totale peut être faite vers le mode mixeur si par exemple trop peu de terminaux continuent de fonctionner en mode répliquant.

Selon une seconde variante dite de « gestion dynamique commune », le module de fonctionnement en mode répliquant est activé si l'ensemble des terminaux disposent de capacités suffisantes pour supporter le mode répliquant, et le module de fonctionnement en mode mixeur est activé si au moins un terminal ne dispose pas de capacités suffisantes pour supporter le mode répliquant.

Le passage à un flux mixé sera donc renégocié pour tous les terminaux. En SIP par exemple, la négociation des flux média se fait comme pour un appel SIP point à point standard entre chaque participant et le pont de conférence. C'est à ce dernier de gérer, de décoder et de mixer les flux venant des terminaux participants et de renvoyer le résultat vers chacun d'entre eux.

Il est à noter que dans le cadre de la présente description, le mixage comprend toutes les opérations qui vont du mixage simple standard aux options incluant différents traitements audio, comme le contrôle automatique de gain, etc., ainsi que la spatialisation. Pour cette dernière, le changement de mode nécessite de tenir compte des positions dans les espaces de restitution. En effet, pour un pont mixeur, la spatialisation se fait sur le pont alors que pour un pont répliquant, elle se fait sur le terminal. Cela implique, lors d'un changement de mode, que la cohérence des localisations des sources soit respectée. Il est donc nécessaire d'établir un dialogue entre le terminal et le pont à travers le protocole de signalisation par exemple afin que des informations de cohérence soient transmises.

Un pont de conférence mixte selon l'invention n'empêche donc pas des traitements plus complexes, comme la spatialisation, et permet à l'inverse à des terminaux disposant d'un seul haut-parleur et de capacités en bande passante ou CPU très limitées de participer à la conférence, sans dégrader la qualité de celles des autres.

La description qui va suivre en regard des dessins annexés, donnés à titre d'exemples non limitatifs, fera bien comprendre en quoi consiste l'invention et comment elle peut être réalisée.
La figure 1a est un schéma d'un pont mixte conforme à l'invention.
La figure 1b est un schéma de fonctionnement du pont mixte de la figure 1a.
La figure 2a est un diagramme de fonctionnement du pont de la figure 1 en mode de gestion fixe.
La figure 2b est un diagramme de fonctionnement du pont de la figure 1 en mode de gestion dynamique.
La figure 3a est un schéma d'un exemple de fonctionnement d'un pont mixte conforme à l'invention en mode de gestion dynamique individualisée avant l'arrivée d'un nouveau participant.
La figure 3b est un schéma de l'exemple de fonctionnement de la figure 3a après l'arrivée d'un nouveau participant.

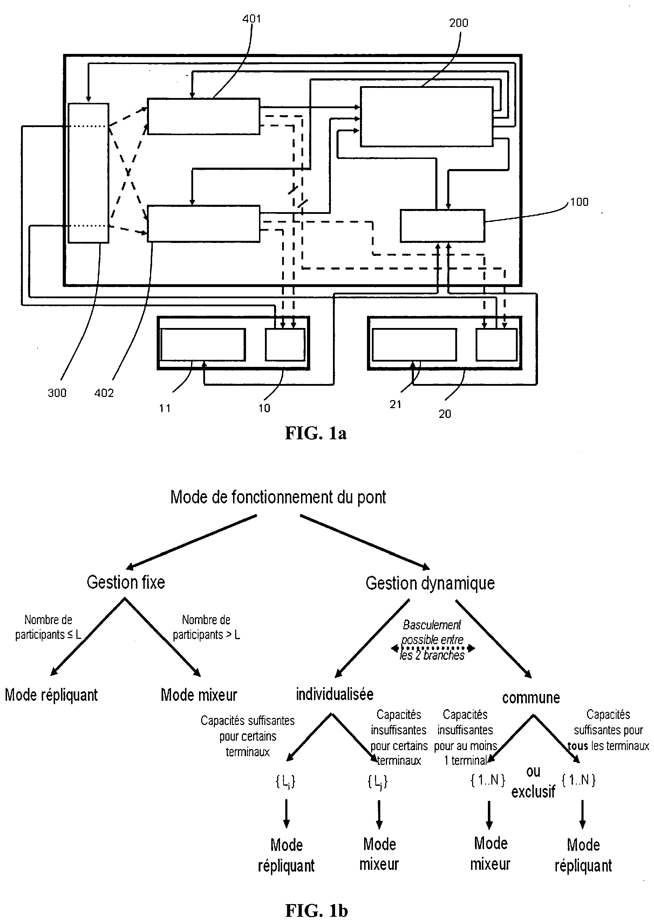

Sur la figure 1a est représenté un pont de conférence mixte destiné à mettre en communication une pluralité de terminaux participant à une conférence audio, par exemple un terminal 10 et un terminal 20. Ce pont de conférence comprend :
- un module 100 de négociation dont le rôle est d'échanger des messages de signalisation avec les terminaux 10, 20. Il permet de créer des conférences, négocier avec les modules 11, 21 de négociation des terminaux et en déduire leurs capacités. Ce module 100 de négociation transmet ces informations à un module 200 de gestion et en reçoit des commandes. Ces commandes permettent de répondre ou de proposer des alternatives aux propositions des terminaux, suivant que le pont mixte fonctionne en mode mixeur et/ou répliquant pour une conférence donnée,
- un module démultiplexeur audio 300 qui gère les flux audio entrants issus des terminaux 10, 20 et les envoie, suivant les consignes du module 200 de gestion, vers un module 401 de fonctionnement en mode répliquant, ou module répliquant, et/ou un module 402 de fonctionnement en mode mixeur, ou module mixeur,
- un module répliquant 401 dont le rôle est de transférer les flux audio issus de chaque terminal participant vers tous les autres terminaux participants. Il est commandé par le module 200 de gestion et lui envoie des informations concernant sa charge CPU ou les limites pour le débit sortant ou entrant. Il reçoit des flux audio par l'intermédiaire du module démultiplexeur audio 300, les duplique et les renvoie vers les différents terminaux,
- un module mixeur 402 dont le rôle est de mixer les différents flux audio en fonction de chaque participant, avant de lui envoyer. Il est commandé par le module 200 de gestion et lui envoie des informations concernant sa charge CPU ou les limites pour le débit sortant ou entrant. Il reçoit des flux audio par l'intermédiaire du module démultiplexeur audio 300, les mixe et les renvoie vers les différents terminaux,
- un module 200 de gestion qui contrôle le pont mixte. Il analyse les renseignements reçus de la part des différents modules et leur envoie des commandes. En fonction des renseignements reçus concernant notamment les terminaux participants et leurs capacités à supporter le mode répliquant, il fonctionne selon un mode de gestion fixe ou dynamique, individualisée ou commune, et décide pour chaque conférence qu'il héberge d'activer les modules répliquant 401 et/ou mixeur 402.

Il faut souligner que les modules 401 et 402 peuvent être des entités physiques différentes avec des adresses IP différentes, mais contrôlées par une entité intelligente contenant les capacités de dialogue avec les terminaux à travers un protocole de signalisation comme SIP.

Le schéma de fonctionnement de la figure 1b résume les possibilités de choix dont dispose le module 200 de gestion pour décider du mode à activer.

En résumé, en mode de gestion fixe, le choix entre module répliquant 401 et module mixeur 402 se fait par rapport à un nombre limite L déterminé a priori. Si le nombre de terminaux participants est au plus égal à L, le module activé est le module répliquant 401 pour tous les terminaux. Inversement, le module mixeur 402 est activé pour tous les participants dès que leur nombre dépasse L.

En mode de gestion dynamique individualisée, le module répliquant 401 est activé pour les terminaux pouvant supporter le mode répliquant, tandis que le module mixeur 402 est activé pour les autres.

En mode de gestion dynamique commune, le module répliquant 401 est activé tant que tous les terminaux participants ont les capacités suffisantes pour supporter le mode répliquant, et, dès qu'au moins un terminal ne peut supporter le mode répliquant, alors le module mixeur 402 est activé pour l'ensemble des terminaux.

Il est possible de basculer du mode de gestion dynamique individualisée au mode de gestion dynamique commune et inversement.

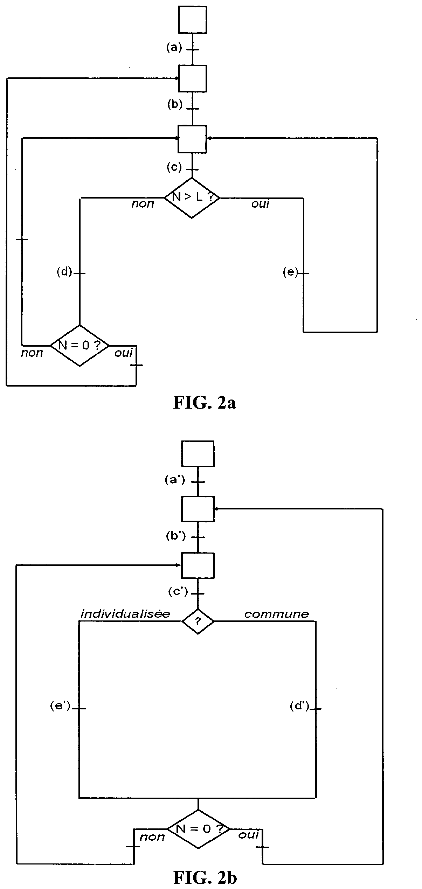

Les modes de gestion fixe et dynamique vont maintenant être détaillés en référence aux figures 2a et 2b.

La figure 2a se rapporte au mode de gestion fixe.

A l'initialisation (a) du pont mixte, le nombre limite L de terminaux participants définissant le basculement du mode répliquant au mode mixeur est connu et déterminé a priori.

En (b), un premier participant entre en conférence.

Le module 100 de négociation informe le module 200 de gestion qu'une conférence vient d'être créée avec un nombre de participants N=1.

Le module 200 de gestion avertit, d'une part le démultiplexeur audio 300 qu'il va recevoir des paquets audio à envoyer ensuite au module répliquant 401, et d'autre part le module 100 de négociation qu'il doit négocier en tenant compte du mode répliquant.

En (c), on envisage l'arrivée d'un nouveau participant ou le départ d'un participant présent.

Le module 100 de négociation avertit le module 200 de gestion qu'un participant vient de rejoindre ou quitter la conférence.

Le module 200 de gestion avertit le démultiplexeur audio 300 qu'il va recevoir ou arrêter de recevoir des paquets audio pour ce participant.

En (e), si l'arrivée d'un nouveau participant fait passer le nombre N de terminaux à la conférence de L à L+1, alors on change de mode. Le module 200 de gestion commande au module mixeur 402 de traiter les flux audio de la conférence et au module répliquant 401 d'arrêter le traitement en cours. Le démultiplexeur audio 300 reçoit des ordres en conséquence. Le module 100 de négociation doit négocier avec tous les autres terminaux le passage en mode mixeur. Si, par contre, on était déjà dans le mode mixeur, on y reste et ce qui précède n'est pas effectué.

Le module 200 de gestion avertit le module mixeur 402 qu'il doit tenir compte de l'arrivée ou du départ d'un participant.

En cas d'arrivée d'un participant, le module 200 de gestion commande le module 100 de négociation de négocier avec le participant en tenant compte du mode mixeur.

En (d), si le départ d'un participant fait passer le nombre de terminaux à la conférence de L+1 à L, alors on change de mode. Le module 200 de gestion commande au module répliquant 401 de traiter les flux audio de la conférence et au module mixeur 402 d'arrêter le traitement en cours. Le démultiplexeur audio 300 reçoit des ordres en conséquence. Le module 100 de négociation doit négocier avec tous les autres terminaux le passage en mode répliquant. Si, par contre, on était déjà dans le mode répliquant, on y reste et ce qui précède n'est pas effectué.

En cas d'arrivée d'un participant avec N toujours au plus égal à L, le module 200 de gestion commande le module 100 de négociation de négocier avec le participant en tenant compte du mode répliquant. Le module 100 de négociation doit aussi négocier avec tous les autres terminaux pour l'ouverture de canaux supplémentaires pour ce nouveau participant.

En cas de départ d'un participant, le module 100 de négociation doit négocier avec les terminaux restants la fermeture des canaux relatifs à ce participant. Si N passe à zéro, c'est que la conférence est terminée, elle est alors fermée.

Le module 200 de gestion avertit le module répliquant 401 qu'il doit tenir compte de l'arrivée ou du départ d'un participant.

La figure 2b se rapporte au mode de gestion dynamique.

A l'initialisation (a'), il est décidé du mode de gestion commune ou individualisée.

En (b'), un premier participant entre en conférence.

Le module 100 de négociation informe le module 200 de gestion qu'une conférence vient d'être crée avec un nombre de participants N=1.

Le module 200 de gestion avertit, d'une part le démultiplexeur audio 300 qu'il va recevoir des paquets audio à envoyer ensuite au module répliquant 401, et d'autre part le module 100 de négociation qu'il doit négocier en tenant compte du mode répliquant.

En (c'), on envisage l'arrivée d'un nouveau participant ou le départ d'un participant présent.

Le module 100 de négociation avertit le module 200 de gestion qu'un participant vient de rejoindre ou quitter la conférence.

Le module 200 de gestion avertit le démultiplexeur audio 300 qu'il va recevoir ou arrêter de recevoir des paquets audio pour ce participant.

En (d'), on traite le mode de gestion dynamique commune.

Si le pont mixte est en mode répliquant et lors de l'arrivée d'un participant, le module 200 de gestion commande le module 100 de négociation de négocier avec tous les participants en tenant compte du mode répliquant et du flux supplémentaire du nouveau participant. Si tous les terminaux supportent le mode répliquant, rien ne change. Le module 200 de gestion avertit le module répliquant 401 qu'il doit tenir compte de l'arrivée d'un participant. Dans le cas contraire, le module 200 de gestion commande le module mixeur 402 qu'il doit traiter les flux audio de la conférence et le module répliquant 401 qu'il doit arrêter le traitement en cours. Le démultiplexeur audio 300 reçoit des ordres en conséquence. Le module 100 de négociation doit renégocier avec tous les terminaux pour le passage en mode mixeur.

Si le pont mixte est en mode mixeur et lors du départ d'un participant, le module 200 de gestion avertit le module mixeur 402 qu'il doit tenir compte du départ de ce participant. Le module 200 de gestion peut demander au module 100 de négociation de renégocier avec tous les terminaux restants pour le passage éventuel au mode répliquant. Cela ne se fera que si tous les terminaux restants supportent le mode répliquant.

Si le pont mixte est en mode mixeur et lors de l'arrivée d'un nouveau participant ou si le pont mixte est en mode répliquant et lors du départ d'un participant, les modes ne changent pas. Dans le premier cas, le module 200 de gestion avertit le module mixeur 402 qu'il doit tenir compte de l'arrivée d'un participant et le module 100 de négociation qu'il doit négocier avec le participant en tenant compte du mode mixeur. Dans le second cas, le module 200 de gestion avertit le module répliquant 401 qu'il doit tenir compte du départ d'un participant et le module 100 de négociation qu'il doit négocier avec les terminaux pour fermer les canaux du participant partant.

En (e'), on traite le mode de gestion dynamique individualisée.

Dans ce mode de gestion, le démultiplexeur audio 300 envoie les flux audio reçus vers le module répliquant 401 et/ou vers le module mixeur 402 selon les modes effectivement utilisés à cet instant.

Lors de l'arrivée d'un nouveau participant, le module 100 de négociation négocie avec ce participant en tenant compte du mode répliquant. Si le terminal supporte ce mode, le module 200 de gestion avertit le module répliquant 401 de tenir compte du nouveau participant. Dans le cas contraire, le module 100 de négociation négocie avec le terminal en tenant compte du mode mixeur. Si le terminal supporte ce mode, le module 200 de gestion avertit le module mixeur 402 de tenir compte du nouveau participant. Le module 100 de négociation doit renégocier avec tous les terminaux utilisant le pont en mode répliquant pour ouvrir des canaux supplémentaires et, éventuellement, leur faire utiliser le pont en mode mixeur si la négociation échoue.

Lors du départ d'un participant, le module 200 de gestion, informé par le module 100 de négociation, avertit le module mixeur 402 et/ou le module répliquant 401 qu'il doit en tenir compte. Il peut éventuellement demander au module 100 de négociation de renégocier le passage en mode répliquant pour les terminaux utilisant le mode mixeur. Pour les terminaux utilisant le mode répliquant, les canaux relatifs au participant partant sont fermés après renégociation. Si N passe à zéro, c'est que la conférence est terminée, elle est alors fermée.

Si trop peu de participants sont en mode répliquant, le module 200 de gestion peut demander au module 100 de négociation de négocier en tenant compte du mode mixeur pour une conférence donnée.

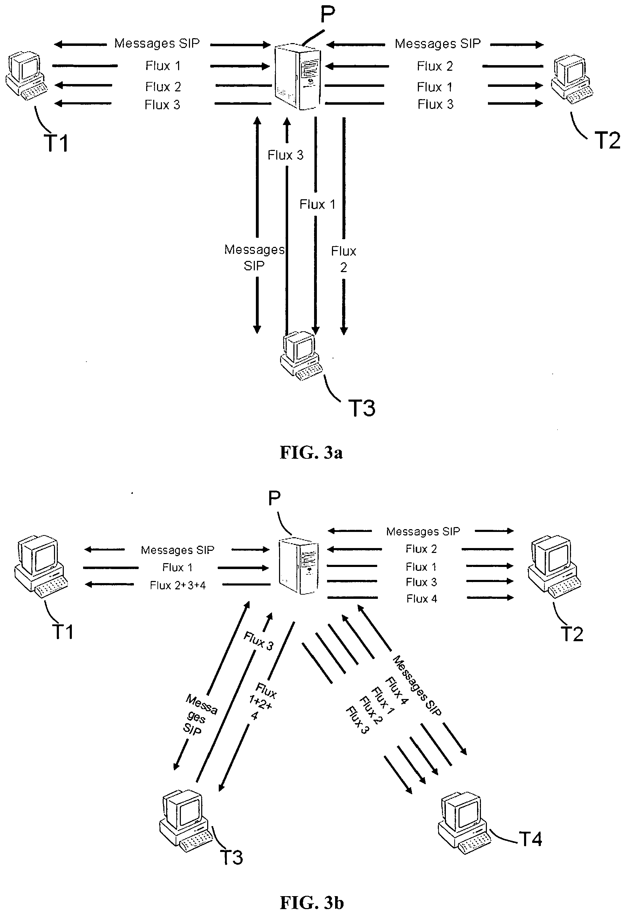

On va maintenant décrire en référence aux figures 3a et 3b un exemple d'application de l'invention à une conférence audio spatialisée en VoIP, avec le protocole signalisation SIP et plusieurs terminaux en conférence dont les flux média sont centralisés sur un pont de conférence conforme à l'invention.

Sur la figure 3a, trois terminaux T1, T2, T3 sont en conférence et le pont mixte P fonctionne en gestion dynamique individualisée par rapport à chaque participant et par défaut en mode répliquant. Les terminaux sont capables de recevoir et de traiter les flux audio des autres et, les négociations de flux ayant abouti positivement, le pont P reste en mode répliquant

Sur la figure 3b, un quatrième terminal T4 a rejoint la conférence et des renégociations SIP s'effectuent. Les terminaux T1 et T3 ne peuvent ouvrir de canaux supplémentaires, et le pont mixte P renégocie pour eux un seul flux mixé en retour selon le mode mixeur du pont. Pour les terminaux T2 et T4 qui ont suffisamment de capacités, trois canaux descendants sont ouverts avec le pont P qui pour ces deux terminaux continue de fonctionner en mode répliquant. Les terminaux T2 et T4 peuvent traiter les flux audio de la manière qu'ils souhaitent avec par exemple une spatialisation au lieu d'un simple mixage, sans que cela influence les terminaux T1 et T3.

## Revendications

1. Pont de conférence destiné à mettre en communication une pluralité de N terminaux participant à une conférence audio, **caractérisé en ce que** ledit pont de conférence comprend :
un module (401) de fonctionnement en mode répliquant apte à recevoir respectivement N flux des N terminaux et à transmettre à au moins un terminal (N-1) flux provenant des (N-1) autres terminaux,
un module (402) de fonctionnement en mode mixeur apte à recevoir respectivement N flux des N terminaux et à transmettre un flux mixé de (N-1) flux parmi les N flux reçus et
un module (200) de gestion apte à déterminer pour chaque terminal de la pluralité le module de fonctionnement à activer, ladite détermination dépendant du nombre de terminaux disposant de capacités suffisantes pour supporter le mode répliquant.

2. Pont de conférence selon la revendication 1, dans lequel le module (401) de fonctionnement en mode répliquant est activé pour un nombre de terminaux au plus égal à un nombre limite (L) pour lequel les terminaux disposent de capacités suffisantes pour supporter le mode répliquant, et le module (402) de fonctionnement en mode mixeur est activé pour un nombre de terminaux supérieur audit nombre limite (L).

3. Pont de conférence selon la revendication 1, dans lequel seul le module (401) de fonctionnement en mode répliquant est activé tant que le nombre de terminaux est compatible avec les capacités desdits terminaux à supporter le mode répliquant.

4. Pont de conférence selon la revendication 3, dans lequel ledit module (401) de fonctionnement en mode répliquant est activé pour les terminaux disposant de capacités suffisantes pour supporter le mode répliquant, et ledit module (402) de fonctionnement en mode mixeur est activé pour les terminaux ne disposant pas de capacités suffisantes pour supporter le mode répliquant.

5. Pont de conférence selon l'une des revendications 3 ou 4, dans lequel ledit module (401) de fonctionnement en mode répliquant est activé si l'ensemble des terminaux disposent de capacités suffisantes pour supporter le mode répliquant, et le module (402) de fonctionnement en mode mixeur est activé si au moins un terminal ne dispose pas de capacités suffisantes pour supporter le mode répliquant.

## Patentansprüche

1. Zum Herstellen einer Kommunikation zwischen einer Vielzahl von N an einer Audiokonferenz teilnehmenden Endgeräten ausgebildete Konferenzbrücke, **dadurch gekennzeichnet, dass** die Konferenzbrücke umfasst:
ein Modul (401) zur Funktion im Antwortmodus, ausgebildet zum Empfangen von jeweils N Strömen der N Endgeräte und zum Senden von von den (N-1) anderen Endgeräten stammenden (N-1) Strömen an ein Endgerät,
ein Modul (402) zur Funktion im Mischmodus, ausgebildet zum Empfangen von jeweils N Strömen der N Endgeräte und zum Senden eines gemischten Stroms von (N-1) Strömen von den N empfangenen Strömen und
ein Modul (200) zur Verwaltung, ausgebildet zum Ermitteln des zu aktivierenden Funktionsmoduls für jedes Endgerät der Vielzahl, wobei das Ermitteln von der Zahl von über ausreichenden Kapazitäten zum Unterstützen des Antwortmodus verfügenden Endgeräten abhängt.

2. Konferenzbrücke nach Anspruch 1, wobei das Modul (401) zur Funktion im Antwortmodus für eine Zahl von Endgeräten maximal gleich einer Grenzzahl (L), für welche die Endgeräte über ausreichende Kapazitäten zum Unterstützen des Antwortmodus verfügen, aktiviert wird, und das Modul (402) zur Funktion im Mischmodus für eine Zahl von Endgeräten größer als die Grenzzahl (L) aktiviert wird.

3. Konferenzbrücke nach Anspruch 1, wobei ausschließlich das Modul (401) zur Funktion im Antwortmodus aktiviert wird, sofern die Zahl von Endgeräten vereinbar mit den Kapazitäten der Endgeräte zum Unterstützen des Antwortmodus vereinbar ist.

4. Konferenzbrücke nach Anspruch 3, wobei das Modul (401) zur Funktion im Antwortmodus für die über ausreichende Kapazitäten zum Unterstützen des Antwortmodus verfügenden Endgeräte aktiviert wird, und das Modul (402) zur Funktion im Mischmodus für die nicht über ausreichende Kapazitäten zum Unterstützen des Antwortmodus verfügenden Endgeräte aktiviert wird.

5. Konferenzbrücke nach Anspruch 3 oder 4, wobei das Modul (401) zur Funktion im Antwortmodus aktiviert wird, wenn alle Endgeräte über ausreichende Kapazitäten zum Unterstützen des Antwortmodus verfügen, und das Modul (402) zur Funktion im Mischmodus aktiviert wird, wenn wenigstens ein Endgerät nicht über ausreichende Kapazitäten zum Unterstützen des Antwortmodus verfügt.

## Claims

1. Conference bridge intended to connect a plurality of N terminals involved in an audio conference, **characterized in that** said conference bridge comprises: a replicating-mode operating module (401), able to receive respectively N streams from the N terminals and to transmit to at least one terminal (N-1) streams originating from the (N-1) other terminals,
a mixer-mode operating module (402), able to receive respectively N streams from the N terminals and to transmit a mixed stream of (N-1) streams out of the N streams received, and
a management module (200) able to determine for each terminal of the plurality the operating module to be activated, said determination depending on the number of terminals having sufficient capabilities to support the replicating mode.

2. Conference bridge according to Claim 1, in which the replicating-mode operating module (401) is activated for a number of terminals at most equal to a limit number (L) for which the terminals have sufficient capabilities to support the replicating mode, and the mixer-mode operating module (402) is activated for a number of terminals greater than said limit number (L).

3. Conference bridge according to Claim 1, in which only the replicating-mode operating module (401) is activated as long as the number of terminals is compatible with the capabilities of said terminals to support the replicating mode.

4. Conference bridge according to Claim 3, in which said replicating-mode operating module (401) is activated for the terminals that have sufficient capabilities to support the replicating mode, and said mixer-mode operating module (402) is activated for the terminals that do not have sufficient capabilities to support the replicating mode.

5. Conference bridge according to either of Claims 3 and 4, in which the replicating-mode operating module (401) is activated if all the terminals have sufficient capabilities to support the replicating mode, and the mixer-mode operating module (402) is activated if at least one terminal does not have sufficient capabilities to support the replicating mode.
